# FASCICULE DE BREVET EUROPEEN

(11) **EP 1 730 412 B1**
(45) Date de publication et mention de la délivrance du brevet: **17.12.2008**
(21) Numéro de dépôt: 05739431.4
(22) Date de dépôt: 23.03.2005
(51) Int. Cl.: F16D 13/58

(54) **EMBRAYAGE, NOTAMMENT POUR VÉHICULE AUTOMOBILE, COMPORTANT UN MÉCANISME A COUVERCLE PERFECTIONNÉ.**
KUPPLUNG, INSBESONDERE FÜR EIN KRAFTFAHRZEUG, MIT EINEM VERBESSERTEN DECKELMECHANISMUS
CLUTCH, ESPECIALLY FOR A MOTOR VEHICLE, COMPRISING AN IMPROVED COVER MECHANISM

(30) Priorité: 01.04.2004 FR 0450650
(43) Date de publication de la demande: 13.12.2006
(73) Titulaire: Valeo Embrayages, 80009 Amiens Cedex 1 (FR)
(72) Inventeur: DUBOIS, Bernard, F-80300 ALBERT (FR)
(74) Mandataire: Doressamy, Clarisse
(86) Numéro de dépôt international: PCT/FR2005/050189
(87) Numéro de publication internationale: WO 2005/098254

(56) Documents cités:
- FR-A- 2 764 016
- US-A- 5 713 449

## Description

L'invention concerne un embrayage, notamment pour véhicule automobile, comportant un mécanisme à couvercle perfectionné.

Dans un véhicule automobile, un embrayage est destiné à coupler des organes rotatifs menant et mené d'axes de rotation sensiblement alignés. L'organe rotatif menant est couplé au moteur, plus particulièrement à un vilebrequin du moteur, et l'organe rotatif mené est généralement couplé à un arbre de boîte de vitesses.

L'embrayage comporte au moins un mécanisme entraîné en rotation par l'organe menant. Ce mécanisme comprend un couvercle, un diaphragme et un plateau de pression, tous liés en rotation avec l'organe menant.

Afin de coupler les organes rotatifs menant et mené, le diaphragme enserre un disque de friction, lié en rotation avec l'organe rotatif mené, entre le plateau de pression et un plateau de réaction solidaire en rotation du couvercle.

On connaît déjà dans l'état de la technique un embrayage, notamment pour véhicule automobile, du type comportant un mécanisme comprenant un couvercle, de forme générale de révolution, dans lequel est logé au moins un diaphragme destiné à solliciter un plateau de pression, ce diaphragme étant susceptible, lorsqu'il transmet un effort au plateau de pression, d'appliquer au couvercle un effort d'appui.

Le document FR 2764016 révèle le préambule de la revendication 1. Le diaphragme est habituellement articulé sur le couvercle de façon à pouvoir basculer, notamment dans le cas d'un mécanisme de type poussé, entre une position embrayée, vers laquelle ce diaphragme est rappelé élastiquement, et une position débrayée, vers laquelle ce diaphragme est déplacé par une butée de commande à l'encontre de sa force de rappel.

Dans le cas d'un embrayage transmettant des couples élevés, l'effort d'appui exercé par le diaphragme sur le couvercle peut être relativement important et déformer notablement ce couvercle.

Dans la position embrayée, le plateau de pression est sollicité par une charge axiale du diaphragme. L'effort d'appui appliqué au couvercle déforme alors le couvercle vers l'extérieur d'un espace, délimité par ce couvercle, dans lequel est agencé le plateau de pression.

Dans la position débrayée, l'effort exercé par la butée de commande est transmis au couvercle par l'intermédiaire d'une zone d'articulation du diaphragme. Le couvercle subit alors une déformation vers l'intérieur de l'espace dans lequel est agencé le plateau de pression.

Du fait que le diaphragme est porté par le couvercle, la déformation de ce dernier a pour conséquence d'augmenter notablement la course du diaphragme entre ses positions embrayée et débrayée.

On souhaite donc limiter les déformations du couvercle et ainsi les variations de la course du diaphragme pour optimiser la réactivité de la commande de l'embrayage.

Or la limitation des déformations du couvercle par augmentation de son épaisseur requiert de modifier l'outillage de fabrication de ce couvercle, ce qui est généralement coûteux.

L'invention a notamment pour but de limiter les déformations du couvercle du mécanisme d'un embrayage à l'aide de moyens simples ne requérant que des adaptations limitées des moyens classiques de fabrication du mécanisme de l'embrayage.

A cet effet, l'invention a pour objet un embrayage du type précité, comportant au moins un organe de renfort rapporté sur le couvercle, de manière à augmenter la raideur de ce couvercle au moins dans une zone du couvercle soumise à l'effort d'appui.

La déformation du couvercle est donc limitée à l'aide de l'organe de renfort rapporté pouvant être fixé sur le couvercle à l'aide d'un outillage simple facile à incorporer dans les moyens classiques de fabrication du mécanisme de l'embrayage.

Un embrayage selon l'invention peut en outre comporter l'une ou plusieurs des caractéristiques suivantes :
- l'organe de renfort est fixé sur le couvercle à l'aide de moyens de fixation choisis parmi un élément de liaison rapporté sur l'organe de renfort et le couvercle, un cordon de soudure reliant l'organe de renfort et le couvercle, et un élément, venu de matière avec l'organe de renfort ou le couvercle, serti sur le couvercle ou l'organe de renfort ;
- les moyens de fixation comprennent au moins un élément de liaison portant un organe de rappel axial du plateau de pression, cet organe de rappel liant en rotation le plateau de pression au couvercle tout en autorisant un débattement axial de ce plateau de pression par rapport au couvercle ;
- les moyens de fixation comprennent au moins un élément de liaison portant un élément d'articulation et d'appui du diaphragme ;
- l'embrayage comporte deux diaphragmes montés en série, l'élément d'articulation et d'appui coopérant avec l'un des deux diaphragmes ;
- l'élément de liaison est un rivet ;
- l'élément de liaison est une vis, notamment une vis de fixation du couvercle sur un volant moteur ;
- les moyens de fixation comprennent plusieurs éléments de liaison répartis en une couronne centrée sensiblement sur un axe géométrique du couvercle ;
- l'élément d'articulation et d'appui du diaphragme est porté par l'ensemble des éléments de liaison de la couronne ;
- la couronne d'éléments de liaison est dite interne, les moyens de fixation comprenant plusieurs éléments de liaison répartis en une autre couronne, dite externe, centrée sensiblement sur l'axe géométrique du couvercle ;
- les moyens de fixation comprennent au moins un cordon de soudure ;
- les moyens de fixation comprennent deux cordons de soudure entre lesquels est intercalée radialement la couronne d'éléments de liaison ;
- l'organe de renfort est muni d'une butée destinée à former un appui pour le diaphragme au repos lors du montage de l'embrayage ;
- l'organe de renfort est agencé sur le couvercle de manière à délimiter avec ce couvercle un caisson de rigidification ;
- le caisson de rigidification s'étend radialement sensiblement entre les couronnes interne et externe d'éléments de liaison ;
- le caisson de rigidification s'étend radialement sensiblement entre la couronne d'éléments de liaison et le cordon de soudure ;
- l'organe de renfort est en tôle métallique et comprend de préférence des bossages de rigidification sensiblement radiaux ;
- l'organe de renfort est en métal moulé et comprend de préférence des nervures de rigidification sensiblement radiales ;
- l'organe de renfort comprend une partie interne radialement, s'étendant en porte-à-faux par rapport au couvercle, portant un élément d'articulation et d'appui du diaphragme ;
- l'organe de renfort comprend au moins une zone usinée pour l'équilibrage de l'embrayage ;
- l'embrayage comporte plusieurs organes de renfort, formés par des secteurs espacés circonférentiellement sur le couvercle ;
- le couvercle est en tôle métallique et comprend de préférence des bossages de rigidification sensiblement radiaux ;
- l'organe de renfort est rapporté à l'intérieur du couvercle ;
- l'organe de renfort est rapporté à l'extérieur du couvercle.
- il est apte à être combiné à un système de boîte de vitesse de type robotisée

L'invention sera mieux comprise à la lecture de la description qui va suivre, donnée uniquement à titre d'exemple et faite en se référant aux dessins annexés dans lesquels :
- la figure 1 est une vue en coupe axiale d'un mécanisme d'un embrayage selon un premier mode de réalisation de l'invention ;
- les figures 2 à 11 sont des vues analogues à la figure 1 montrant des deuxième à dixième modes de réalisation de l'invention ;
- la figure 12 est une vue de face d'un couvercle d'un mécanisme d'un embrayage selon un onzième mode de réalisation de l'invention ;

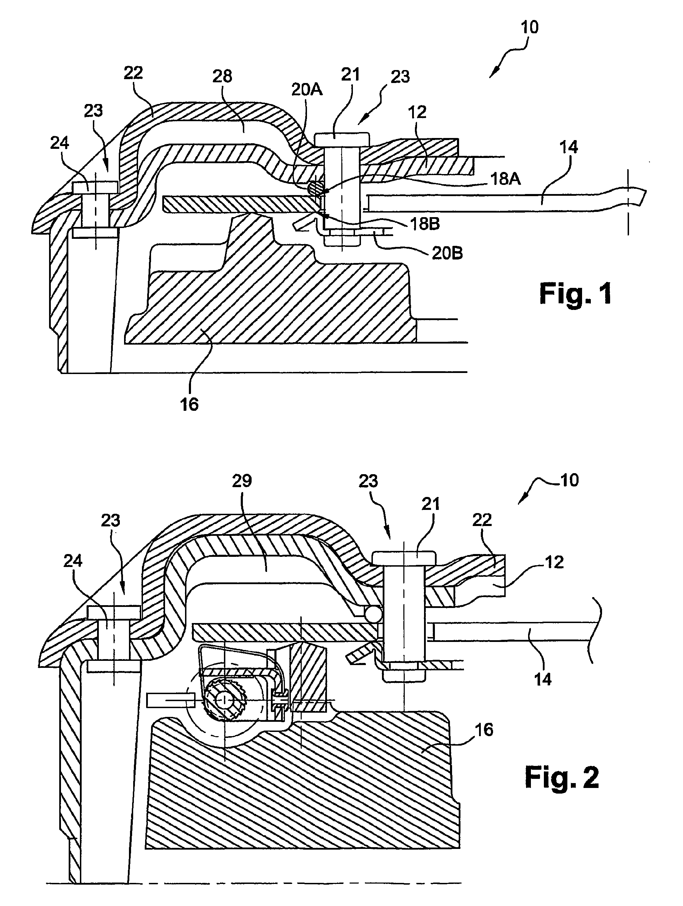

On a représenté sur la figure 1 un mécanisme d'un embrayage pour véhicule automobile selon un premier mode de réalisation de l'invention. Ce mécanisme est désigné par la référence générale 10.

Le mécanisme 10 comporte un couvercle 12, généralement en tôle métallique, de forme générale de révolution, dans lequel est logé un diaphragme 14. Le diaphragme 14 est destiné à solliciter un plateau de pression 16 de manière à enserrer un disque de friction (non représenté) contre un plateau de réaction (non représenté).

Dans ce qui suit, on qualifie d'intérieur au couvercle 12 un élément agencé axialement entre ce couvercle et le plateau de pression 16 ou de réaction.

Le diaphragme 14 est articulé entre des première 18A et seconde 18B parties d'appui et d'articulation portées par le couvercle 12. Dans l'exemple décrit, ces première 18A et seconde 18B parties d'appui et d'articulation sont respectivement formées par des premier 20A et second 20B éléments d'articulation et d'appui, portés par des rivets 21 liés au couvercle 12 et répartis en une couronne radialement interne centrée sensiblement sur un axe géométrique du couvercle 12.

Le premier élément d'appui et d'articulation 20A est un anneau torique, entourant les rivets 21 de manière à être centré par rapport au couvercle 12. Cet anneau 20A est intercalé entre le diaphragme 14 et le couvercle 12 de façon à prendre appui sur ce dernier. Le diaphragme 14 est donc susceptible d'appliquer au couvercle 12 un effort d'appui par l'intermédiaire de cet anneau 20A lorsqu'il transmet un effort au plateau de pression 16.

Le second élément d'appui et d'articulation 20B est une bague comportant une zone circonférentielle repliée de manière à former la seconde partie d'appui et d'articulation 18B. Cette bague 20B entoure elle aussi les rivets 21.

On peut noter que d'autres dispositifs connus réalisant l'articulation du diaphragme 14 sont aussi compatibles avec la présente invention.

Afin d'augmenter la raideur du couvercle 12, au moins dans une zone de ce couvercle 12 soumise à l'effort d'appui, un organe de renfort 22 est rapporté sur le couvercle 12.

Selon le mode de réalisation décrit en référence à la figure 1, cet organe de renfort 22 est en tôle métallique. L'organe de renfort 22 peut être réalisé dans un autre matériau que le couvercle 12 et que cet organe de renfort 22 peut être d'épaisseur différente de celle du couvercle 12.

L'organe de renfort 22 est fixé sur le couvercle 12 à l'aide de moyens de fixation 23. Ces moyens de fixation 23 comportent plusieurs éléments de liaison rapportés sur l'organe de renfort 22 et le couvercle 12.

Il est avantageux d'utiliser comme éléments de liaison des organes existant déjà sur le couvercle 12, comme par exemple les rivets 21 centrant l'anneau 20A et portant la bague 208.

En général, les moyens de fixation 23 comportent d'autres éléments de liaison. Dans le premier mode de réalisation, ces autres éléments de liaison sont des rivets 24 répartis en une autre couronne, radialement externe, centrée sensiblement sur l'axe géométrique du couvercle 12.

L'organe de renfort 22 est agencé sur le couvercle 12 de manière à obtenir une raideur optimale du couvercle. Par exemple, l'organe de renfort 22 est agencé sur le couvercle 12 de manière à délimiter avec ce couvercle 12 un caisson 28 de rigidification. Ce caisson 28 s'étend dans ce cas radialement sensiblement entre les couronnes interne et externe d'éléments de liaison 21 et 24.

On a représenté sur les figures 2 à 11 d'autres modes de réalisation du mécanisme d'embrayage selon l'invention. Sur ces figures, les éléments analogues à ceux de la figure 1 sont désignés par des références identiques.

Selon le mode de réalisation décrit en référence à la figure 2, le couvercle 12 est muni de bossages 29 de rigidification. Ces bossages 29 s'étendent radialement sensiblement entre les couronnes interne et externe d'éléments de liaison 21 et 24.

L'embrayage 10 comporte en outre un dispositif de rattrapage d'usure agencé entre le diaphragme 14 et le plateau de pression 16. Ce dispositif de rattrapage d'usure est destiné à compenser la variation de l'épaisseur du disque de friction, et donc la variation de la course du plateau de pression 16, due à l'usure du disque de friction.

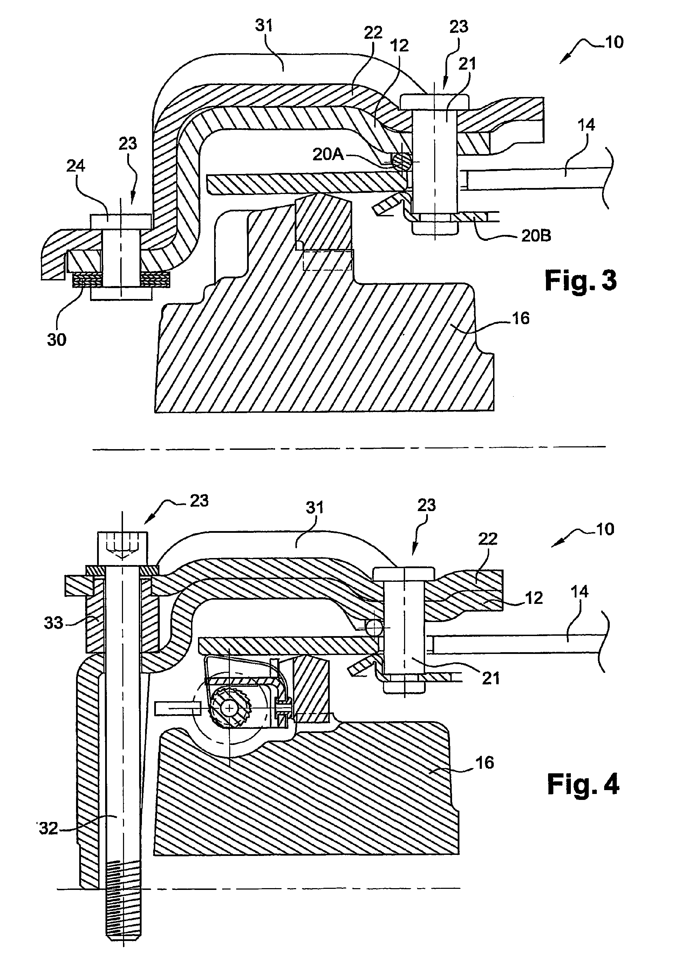

Selon le mode de réalisation décrit en référence à la figure 3, le mécanisme 10 comporte des organes 30 de rappel axial du plateau de pression 16. Ces organes de rappel 30 lient en rotation le plateau de pression 16 au couvercle 12, tout en autorisant un débattement axial de ce plateau 16 de pression par rapport au couvercle 12. Il est avantageux d'utiliser les rivets 24, formant élément de liaison de l'organe de renfort 22 avec le couvercle 12, pour lier les organes de rappel 30 au couvercle 12.

Afin de rigidifier d'avantage le couvercle 12, l'organe de renfort 22 comporte des bossages 31 de rigidification, s'étendant radialement sensiblement entre la couronne interne d'éléments de liaison 21 et la couronne externe d'éléments de liaison 24.

Le cas échéant, on peut prévoir un caisson de rigidification s'étendant radialement sensiblement entre la couronne interne d'éléments de liaison 21 et la couronne externe d'éléments de liaison 24.

Selon le mode de réalisation décrit en référence à la figure 4, l'embrayage est muni de vis 32 de fixation du couvercle 12 sur un volant moteur. Ces vis sont réparties en une couronne radialement externe sur ce couvercle 12.

Il est avantageux d'utiliser ces vis 32 comme éléments de liaison de l'organe de renfort 22 avec le couvercle 12.

Dans ce cas, la forme de l'organe de renfort 22 est adaptée pour recevoir les vis 32. En général, on prévoit entre le couvercle 12 et l'organe de renfort 22 une entretoise 33 entourant chaque vis 32.

Afin de rigidifier d'avantage le couvercle 12, l'organe de renfort 22 est muni de bossages 31 de rigidification, s'étendant radialement sensiblement entre la couronne interne d'éléments de liaison 21 et la couronne externe de vis 32.

Le cas échéant, on peut prévoir un caisson de rigidification s'étendant radialement sensiblement entre la couronne interne d'éléments de liaison 21 et la couronne externe formée par les vis 32.

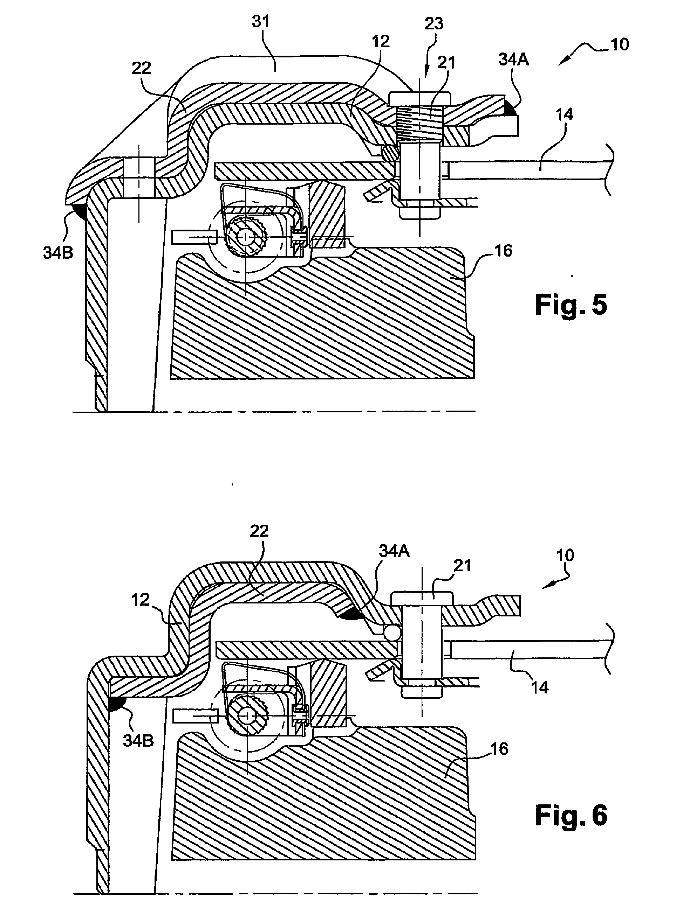

Selon le mode de réalisation décrit en référence à la figure 5, les moyens de fixation 23 comportent deux cordons de soudure 34A et 34B, respectivement dits interne et externe radialement, reliant l'organe de renfort 22 et le couvercle 12, entre lesquels est intercalée radialement la couronne d'éléments de liaison 21. Ces cordons de soudure 34A, 34B sont sensiblement circulaires et s'étendent de façon continue ou discontinue.

En variante, l'organe de renfort 22 peut être fixé sur le couvercle 12 par soudure par points, sans apport de matière.

Selon ce mode de réalisation, les éléments de liaison 21 comportent une zone filetée afin d'être vissés sur le couvercle 12. Ces éléments de liaison 21 peuvent également être vissés sur l'organe de renfort 22 afin de participer à sa fixation sur le couvercle 12.

Afin de rigidifier d'avantage le couvercle 12, l'organe de renfort 22 comporte des bossages 31 de rigidification, s'étendant radialement sensiblement entre la couronne d'éléments de liaison 21 et le cordon de soudure externe 34B.

Le cas échéant, on peut prévoir un caisson de rigidification s'étendant radialement sensiblement entre la couronne d'éléments de liaison 21 et le cordon de soudure externe 34B.

Selon le mode de réalisation décrit en référence à la figure 6, l'organe de renfort 22 est agencé à l'intérieur du couvercle 12. Il est fixé sur ce couvercle 12 au moyen de deux cordons de soudure 34A et 34B, respectivement dits interne et externe radialement. Ces cordons de soudure 34A, 34B sont sensiblement circulaires et s'étendent de façon continue ou discontinue.

En variante, l'organe de renfort 22 peut être fixé sur le couvercle 12 par soudure par points, sans apport de matière.

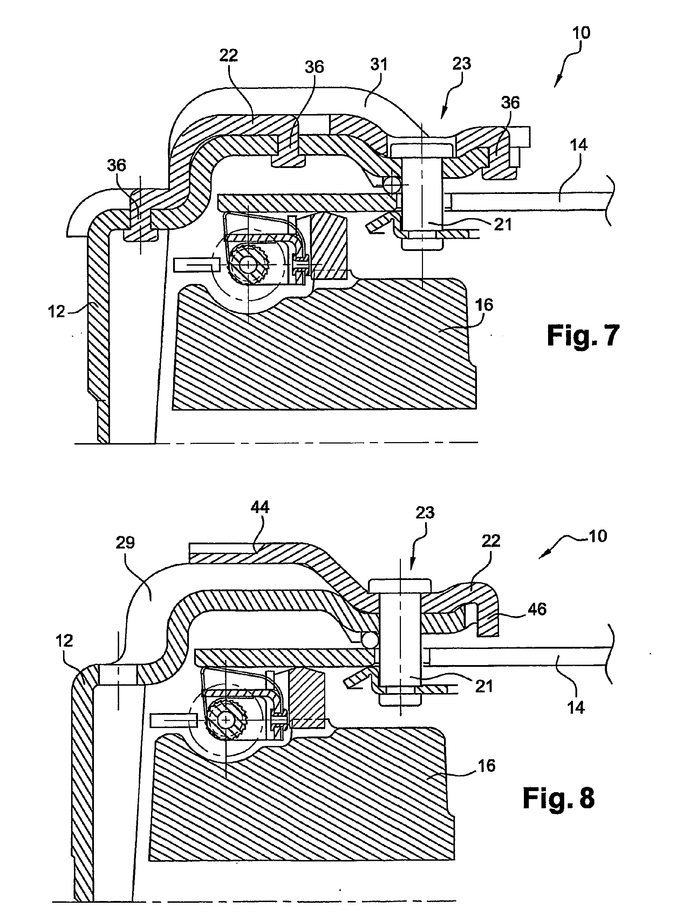

Selon le mode de réalisation décrit en référence à la figure 7, les moyens de fixation 23 comportent les éléments de liaison 21 et des éléments 36, venus de matière avec l'organe de renfort 22 et sertis sur le couvercle 12. En variante, les éléments 36 peuvent être venus de matière avec le couvercle 12 et être sertis sur l'organe de renfort 22.

Selon le mode de réalisation décrit en référence à la figure 8, les moyens de fixation 23 comportent uniquement la couronne des éléments de liaison 21. Par ailleurs, en vue d'augmenter la raideur du couvercle 12, le couvercle 12 est muni de bossages 29 de rigidification sensiblement radiaux.

En plus de sa fonction de renforcement du couvercle, l'organe de renfort 22 représenté sur la figure 8 est destiné à diverses autres fonctions. En particulier, le couvercle 12 étant davantage sollicité par le diaphragme 14 que l'organe de renfort 22, il est avantageux d'effectuer l'équilibrage de l'embrayage par retrait de matière sur une zone 44 de l'organe de renfort 22 plutôt que sur une zone du couvercle 12. Ainsi, le couvercle 12 n'est pas fragilisé par un retrait de matière.

On peut aussi prévoir sur l'organe de renfort 22 une butée 46 destinée à former un appui pour le diaphragme 14 au repos lors du montage de l'embrayage.

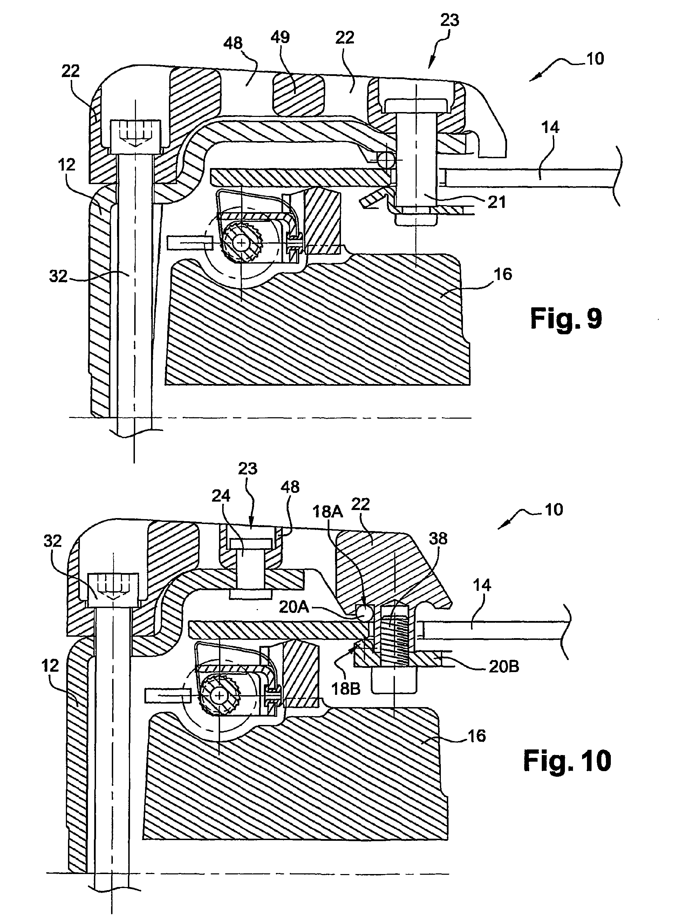

Selon le mode de réalisation décrit en référence à la figure 9, l'organe de renfort 22 est en métal moulé. Dans ce cas, l'organe de renfort 22 est de préférence muni de nervures de rigidification 48 sensiblement radiales reliées par des nervures 49 sensiblement circonférentielles.

Selon ce mode de réalisation, les moyens de fixation 23 comportent une couronne interne, formée par les rivets 21, portant les éléments d'articulation et d'appui 20A, 20B, et une couronne externe, formée par les vis 32 de fixation du couvercle 12 sur le volant moteur.

Selon le mode de réalisation décrit en référence à la figure 10, l'organe de renfort 22 comprend une partie externe radialement, fixée sur le couvercle 12 à l'aide des vis 32 de fixation du couvercle 12 sur le volant moteur et de rivets 24. L'organe de renfort 22 comporte en outre une partie interne radialement, s'étendant en porte-à-faux par rapport au couvercle 12. L'élément 20A d'articulation et d'appui du diaphragme 14 est porté directement par la partie interne radialement, et l'élément 20B d'articulation et d'appui du diaphragme 14 est porté par une vis 38 vissée sur cette partie interne radialement.

Dans le mode de réalisation de la figure 10, les vis 32, les rivets 24 et les vis 38 sont réparties respectivement en couronnes radialement externe, intermédiaire et interne.

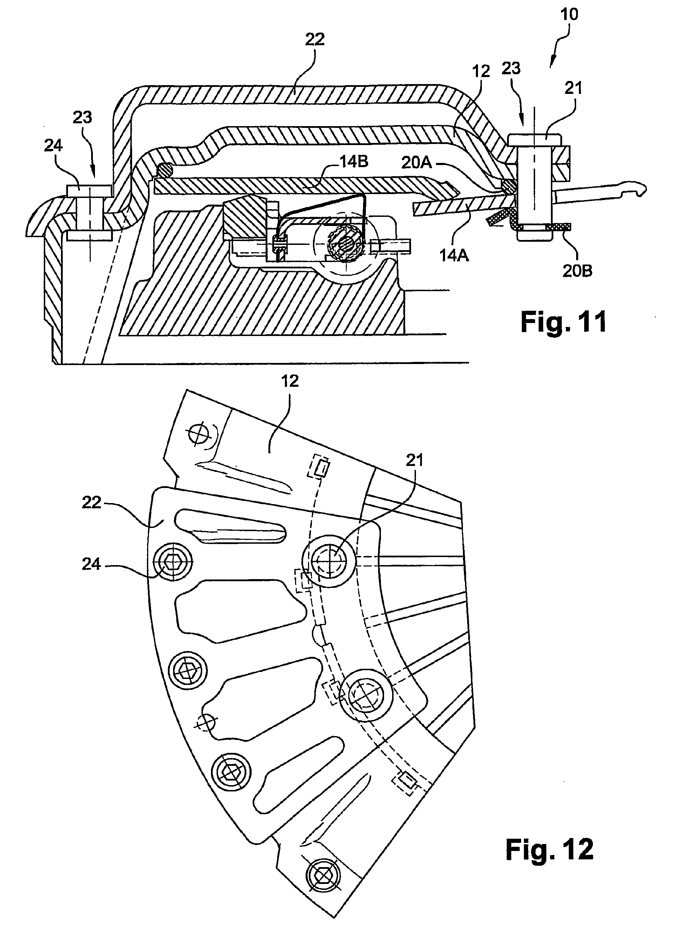

Selon le mode de réalisation décrit en référence à la figure 11, l'organe de renfort 22 est rapporté sur le couvercle 12 d'un embrayage du type comportant des premier 14A et second 14B diaphragmes montés en série, les éléments 20A et 20B d'articulation et d'appui coopérant avec le premier diaphragme 14A.

Un embrayage de ce type est décrit par exemple dans le document FR 2 834 024.

Dans ce type d'embrayage, le diamètre du couvercle 12 est relativement plus important que dans les modes de réalisation précédents si bien que ce couvercle 12 est encore plus sensible à la déformation. Il est donc particulièrement avantageux de renforcer ce couvercle 12 à l'aide de l'organe de renfort 22. Cet organe de renfort 22 est fixé sur le couvercle 12 au moyen des éléments de liaison 21 et 24, disposés en couronnes respectivement interne et externe.

Pour un embrayage selon ce mode de réalisation, l'organe de renfort 22 peut être monté sur le couvercle 12 sur une chaîne de montage de moteurs, après le montage de l'embrayage sur le volant moteur.

Selon le mode de réalisation décrit en référence à la figure 12, l'embrayage comporte plusieurs organes de renfort 22, formés par des secteurs espacés circonférentiellement sur le couvercle 12.

Bien entendu, l'invention n'est pas limitée aux modes de réalisation précédemment décrits.

En particulier, il est possible d'associer l'invention avec des systèmes de boîtes de vitesse robotisées : cela permet d'améliorer la précision de fonctionnement ainsi que la gestion du sytème.

En effet, il est possible de combiner diverses caractéristiques des différents modes de réalisation décrits sans sortir du cadre de l'invention.

## Revendications

1. Embrayage, notamment pour véhicule automobile, du type comportant un mécanisme (10) comprenant un couvercle (12), de forme générale de révolution, dans lequel est logé au moins un diaphragme (14 ; 14A) destiné à solliciter un plateau de pression (16), ce diaphragme (14 ; 14A) étant susceptible, lorsqu'il transmet un effort au plateau de pression (16), d'appliquer au couvercle (12) un effort d'appui, **caractérisé en ce qu'**il comporte au moins un organe de renfort (22) rapporté sur le couvercle (12), de manière à augmenter la raideur de ce couvercle (12) au moins dans une zone du couvercle (12) soumise à l'effort d'appui.

2. Embrayage selon la revendication 1, **caractérisé en ce que** l'organe de renfort (22) est fixé sur le couvercle (12) à l'aide de moyens de fixation (23) choisis parmi un élément de liaison (21 ; 24 ; 32) rapporté sur l'organe de renfort (22) et le couvercle (12), un cordon de soudure (34) reliant l'organe de renfort (22) et le couvercle (12), et un élément (36), venu de matière avec l'organe de renfort (22) ou le couvercle (12), serti sur le couvercle (12) ou l'organe de renfort (22).

3. Embrayage selon la revendication 2, **caractérisé en ce que** les moyens de fixation (23) comprennent au moins un élément de liaison (24) portant un organe (30) de rappel axial du plateau de pression (16), cet organe de rappel (30) liant en rotation le plateau de pression (16) au couvercle (12) tout en autorisant un débattement axial de ce plateau de pression (16) par rapport au couvercle (12).

4. Embrayage selon la revendication 2 ou 3, **caractérisé en ce que** les moyens de fixation (23) comprennent au moins un élément de liaison (21) portant un élément (20B) d'articulation et d'appui du diaphragme (14 ; 14A).

5. Embrayage selon la revendication 4, **caractérisé en ce qu'**il comporte deux diaphragmes (14A, 14B) montés en série, l'élément (20B) d'articulation et d'appui coopérant avec l'un des deux diaphragmes (14A).

6. Embrayage selon l'une quelconque des revendications 2 à 5, **caractérisé en ce que** l'élément de liaison (21 ; 24) est un rivet.

7. Embrayage selon l'une quelconque des revendications 2 à 5, **caractérisé en ce que** l'élément de liaison (32) est une vis, notamment une vis (32) de fixation du couvercle (12) sur un volant moteur.

8. Embrayage selon l'une quelconque des revendications 2 à 7, **caractérisé en ce que** les moyens de fixation (23) comprennent plusieurs éléments de liaison (21 ; 24 ; 32) répartis en une couronne centrée sensiblement sur un axe géométrique du couvercle.

9. Embrayage selon les revendications 4 et 8 prises ensemble, **caractérisé en ce que** l'élément (20B) d'articulation et d'appui du diaphragme (14) est porté par l'ensemble des éléments de liaison (21) de la couronne.

10. Embrayage selon la revendication 8 ou 9, **caractérisé en ce que** la couronne d'éléments de liaisons (21) est dite interne, les moyens de fixation comprenant plusieurs éléments de liaison (24 ; 32) répartis en une autre couronne, dite externe, centrée sensiblement sur l'axe géométrique du couvercle.

11. Embrayage selon la revendication 8 ou 9, **caractérisé en ce que** les moyens de fixation comprennent au moins un cordon de soudure (34A, 34B).

12. Embrayage selon la revendication 11, **caractérisé en ce que** les moyens de fixation comprennent deux cordons de soudure (34A, 34B) entre lesquels est intercalée radialement la couronne d'éléments de liaison (21).

13. Embrayage selon l'une quelconque des revendications précédentes, **caractérisé en ce que** l'organe de renfort (22) est muni d'une butée (46) destinée à former un appui pour le diaphragme (14) au repos lors du montage de l'embrayage.

14. Embrayage selon l'une quelconque des revendications précédentes, **caractérisé en ce que** l'organe de renfort (22) est agencé sur le couvercle (12) de manière à délimiter avec ce couvercle (12) un caisson (28) de rigidification.

15. Embrayage selon les revendications 9 et 14, **caractérisé en ce que** le caisson de rigidification (28) s'étend radialement sensiblement entre les couronnes interne et externe d'éléments de liaison (21 ; 24).

16. Embrayage selon les revendications 11 et 14, **caractérisé en ce que** le caisson de rigidification (28) s'étend radialement sensiblement entre la couronne d'éléments de liaison (21) et le cordon de soudure (34A, 34B).

17. Embrayage selon l'une quelconque des revendications 1 à 16, **caractérisé en ce que** l'organe de renfort (22) est en tôle métallique et comprend de préférence des bossages (31) de rigidification sensiblement radiaux.

18. Embrayage selon l'une quelconque des revendications 1 à 16, **caractérisé en ce que** l'organe de renfort (22) est en métal moulé et comprend de préférence des nervures (48) de rigidification sensiblement radiales.

19. Embrayage selon l'une quelconque des revendications précédentes, **caractérisé en ce que** l'organe de renfort (22) comprend une partie interne radialement, s'étendant en porte-à-faux par rapport au couvercle (12), portant un élément (20B) d'articulation et d'appui du diaphragme (14 ; 14A).

20. Embrayage selon l'une quelconque des revendications précédentes, **caractérisé en ce que** l'organe de renfort (22) comprend au moins une zone (44) usinée pour l'équilibrage de l'embrayage.

21. Embrayage selon l'une quelconque des revendications précédentes, **caractérisé en ce qu'**il comporte plusieurs organes de renfort (22), formés par des secteurs espacés circonférentiellement sur le couvercle (12).

22. Embrayage selon l'une quelconque des revendications précédentes, **caractérisé en ce que** le couvercle (12) est en tôle métallique et comprend de préférence des bossages (29) de rigidification sensiblement radiaux.

23. Embrayage selon l'une quelconque des revendications 1 à 22, **caractérisé en ce que** l'organe de renfort (22) est rapporté à l'intérieur du couvercle (12).

24. Embrayage selon l'une quelconque des revendications 1 à 22, **caractérisé en ce que** l'organe de renfort (22) est rapporté à l'extérieur du couvercle (12).

25. Embrayage selon l'une des revendications 1 à 22, **caractérisé en ce qu'**il est apte à être combiné à un système de boîte de vitesse de type robotisée

## Claims

1. Clutch, in particular for a motor vehicle, of the type comprising a mechanism (10) comprising a cover (12), of general shape of revolution, in which at least one diaphragm (14; 14A) is housed, intended to act on a pressure plate (16), this diaphragm (14; 14A) being able, when it transmits a force to the pressure plate (16), to apply an abutment force to the cover (12), **characterised in that** it comprises at least one reinforcing member (22) attached to the cover (12), so as to increase the stiffness of this cover (12) at least in an area of the cover (12) subjected to the abutment force.

2. Clutch according to claim 1, **characterised in that** the reinforcing member (22) is fixed to the cover (12) using fixing means (23) chosen from amongst a connecting element (21; 24; 32) attached to the reinforcing element (22) and the cover (12), a welding bead (34) connecting the reinforcing member (22) and the cover (12), and an element (36), made in one piece with the reinforcing member (22) or the cover (12), crimped to the cover (12) or the reinforcing member (22).

3. Clutch according to claim 2, **characterised in that** the fixing means (23) comprise at least one connecting element (24) carrying an axial return member (30) of the pressure plate (16), this return member (30) rotationally connecting the pressure plate (16) to the cover (12) whilst allowing axial movement of this pressure plate (16) with respect to the cover (12).

4. Clutch according to claim 2 or 3, **characterised in that** the fixing means (23) comprise at least one connecting element (21) carrying an articulation and abutment element (20b) of the diaphragm (14; 14a).

5. Clutch according to claim 4, **characterised in that** the clutch comprises two diaphragms (14A, 14B) mounted in series, the articulation and abutment element (20B) cooperating with one of the two diaphragms (14A).

6. Clutch according to any one of claims 2 to 5, **characterised in that** the connecting element (21; 24) is a rivet.

7. Clutch according to any one of claims 2 to 5, **characterised in that** the connecting element (32) is a screw (32), in particular a screw (32) for fixing the cover (12) to an engine flywheel.

8. Clutch according to any one of claims 2 to 7, **characterised in that** the fixing means (23) comprise several connecting elements (21; 24; 32) distributed in a ring centred substantially on a geometric axis of the cover.

9. Clutch according to claims 4 and 8 taken together, **characterised in that** the articulation and abutment element (20B) of the diaphragm (14) is carried by all the connecting elements (21) of the ring.

10. Clutch according to claims 8 or 9, **characterised in that** the ring of connecting elements (21) is said to be internal, and the fixing means (24; 32) comprising several connecting elements distributed in another ring, referred to as external, centred substantially on the geometric axis of the cover.

11. Clutch according to claims 8 or 9, **characterised in that** the fixing means comprise at least one welding bead (34A, 34B).

12. Clutch according to claim 11, **characterised in that** the fixing means comprise two welding beads (34A, 34B) between which the ring of connecting elements (21) is interposed radially.

13. Clutch according to any one of the preceding claims, **characterised in that** the reinforcing member (22) is provided with a stop (46) intended to perform an abutment for the diaphragm (14) at rest when the clutch is assembled.

14. Clutch according to any one of the preceding claims, **characterised in that** the reinforcing member (22) is arranged on the cover (12) so as to delimit with this cover (12) a stiffening chamber (28).

15. Clutch according to claims 9 and 14, **characterised in that** the stiffening chamber (28) extends radially substantially between the internal and external rings of connecting elements (21; 24).

16. Clutch according to claims 11 and 14, **characterised in that** the stiffening chamber (28) extends radially substantially between the connecting elements (21) and the welding bead (34A, 34B).

17. Clutch according to any one of claims 1 to 16, **characterised in that** the reinforcing member (22) is made from sheet metal and preferably comprises substantially radial stiffening protrusions (31).

18. Clutch according to any one of claims 1 to 16, **characterised in that** the reinforcing member (22) is made from cast metal and preferably comprises substantially radial stiffening ribs (48).

19. Clutch according to any one of the preceding claims, **characterised in that** the reinforcing member (22) comprises a radially internal part, extending in cantilever with respect to the cover (12), carrying an articulation and abutment element (20B) of the diaphragm (14; 14A).

20. Clutch according to any one of the preceding claims, **characterised in that** the reinforcing member (22) comprises at least one machined zone (44) for balancing the clutch.

21. Clutch according to any one of the preceding claims, **characterised in that** the clutch comprises several reinforcing members (22), formed by sectors spaced apart circumferentially on the cover (12).

22. Clutch according to any one of the preceding claims, **characterised in that** the cover (12) is made from sheet metal and preferably comprises substantially radial stiffening protrusions (29).

23. Clutch according to any one of claims 1 to 22, **characterised in that** the reinforcing member (22) is attached to the inside of the cover (12).

24. Clutch according to any one of claims 1 to 22, **characterised in that** the reinforcing member (22) is attached to the outside of the cover (12).

25. Clutch according to any one of claims 1 to 22, **characterised in that** it is able to be combined with a gearbox system of the robotic type.

## Patentansprüche

1. Kupplung, insbesondere für Kraftfahrzeuge, mit einem Mechanismus (10), der einen Deckel (12) mit umlaufender Gesamtform aufweist, in welchem mindestens eine Membranfeder (14; 14A) angeordnet ist, die dazu bestimmt ist, eine Druckplatte (16) zu beaufschlagen, wobei die Membranfeder (14;14A) geeignet ist, auf den Deckel (12) eine Auflagekraft aufzubringen, wenn sie eine Kraft auf die Druckplatte (16) überträgt, **dadurch gekennzeichnet, dass** sie mindestens ein an dem Deckel (12) angebrachtes Verstärkungsorgan (22) umfasst, um die Steifheit dieses Deckels (12) zumindest in einer Zone des Deckels (12) zu erhöhen, die der Auflagekraft unterworfen ist.

2. Kupplung nach Anspruch 1, **dadurch gekennzeichnet, dass** das Verstärkungsorgan (22) auf dem Deckel (12) mit Hilfe von Befestigungsmitteln (23) befestigt ist, die ausgewählt sind aus einem an dem Verstärkungsorgan (22) und dem Deckel (12) angebrachten Verbindungselement (21; 24; 32), einer das Verstärkungsorgan (22) und den Deckel (12) miteinander verbindenden Schweißnaht (34), und einem einstückig an das Verstärkungsorgan (22) oder den Deckel angeformten Element (36), das auf den Deckel (12) oder das Verstärkungsorgan (22) aufgefalzt ist.

3. Kupplung nach Anspruch 2, **dadurch gekennzeichnet, dass** die Befestigungsmittel (23) mindestens ein Verbindungselement (24) umfassen, welches ein axiales Rückstellorgan (30) der Druckplatte (16) trägt, wobei dieses Rückstellorgan (30) die Druckplatte (16) drehfest mit dem Deckel (12) verbindet und gleichzeitig eine axiale Verschiebung dieser Druckplatte (16) relativ zum Deckel (12) gestattet.

4. Kupplung nach Anspruch 2 oder 3, **dadurch gekennzeichnet, dass** die Befestigungsmittel (23) mindestens ein Verbindungselement (21) umfassen, welches ein Gelenk- und Auflageelement (20B) für die Membranfeder (14; 14A) trägt.

5. Kupplung nach Anspruch 4, **dadurch gekennzeichnet, dass** sie zwei in Reihe geschaltete Membranfedern (14A, 14B) aufweist, wobei das Gelenk- und Auflageelement (20B) mit einer der beiden Membranfedern (14A) zusammenwirkt.

6. Kupplung nach einem der Ansprüche 2 bis 5, **dadurch gekennzeichnet, dass** das Verbindungselement (21; 24) ein Niet ist.

7. Kupplung nach einem der Ansprüche 2 bis 5, **dadurch gekennzeichnet, dass** das Verbindungselement (32) eine Schraube, insbesondere eine Schraube (32) zur Befestigung des Deckels (12) an einem Antriebsschwungrad ist.

8. Kupplung nach einem der Ansprüche 2 bis 7, **dadurch gekennzeichnet, dass** die Befestigungsmittel (23) mehrere Verbindungselemente (21; 24; 32) umfassen, die auf einem Kranz verteilt sind, welcher in etwa auf eine geometrische Achse des Deckels zentriert ist.

9. Kupplung nach Anspruch 4 in Kombination mit Anspruch 8, **dadurch gekennzeichnet, dass** das Gelenk- und Auflageelement (20B) der Membranfeder (14) von der Gruppe der Verbindungselemente (21) des Kranzes getragen ist.

10. Kupplung nach Anspruch 8 oder 9, **dadurch gekennzeichnet, dass** der Kranz von Verbindungselementen (21) als innerer Kranz bezeichnet wird, wobei die Befestigungsmittel mehrere Verbindungselemente (24; 32) umfassen, die auf einem anderen Kranz verteilt sind, der als äußerer Kranz bezeichnet wird und in etwa auf die geometrische Achse des Deckels zentriert ist.

11. Kupplung nach Anspruch 8 oder 9, **dadurch gekennzeichnet, dass** die Befestigungsmittel mindestens eine Schweißnaht (34A, 34b) umfassen.

12. Kupplung nach Anspruch 11, **dadurch gekennzeichnet, dass** die Befestigungsmittel zwei Schweißnähte (34A, 34b) umfassen, zwischen denen der Kranz von Verbindungselementen (21) radial eingeschoben ist.

13. Kupplung nach einem der vorherigen Ansprüche, **dadurch gekennzeichnet, dass** das Verstärkungsorgan (22) mit einem Anschlag (46) versehen ist, der dazu bestimmt ist, eine Auflage für die Membranfeder (14) im Ruhezustand bei der Montage der Kupplung zu bilden.

14. Kupplung nach einem der vorherigen Ansprüche, **dadurch gekennzeichnet, dass** das Verstärkungsorgan (22) auf dem Deckel (12) angeordnet ist, um mit dem Deckel (12) ein Versteifungskasten (28) zu begrenzen.

15. Kupplung nach Anspruch 9 und 14, **dadurch gekennzeichnet, dass** sich der Versteifungskasten (28) radial in etwa zwischen dem inneren und äußeren Kranz von Verbindungselementen (21; 24) erstreckt.

16. Kupplung nach Anspruch 11 und 14, **dadurch gekennzeichnet, dass** sich der Versteifungskasten (28) radial in etwa zwischen dem Kranz von Verbindungselementen (21) und der Schweißnaht (34A, 34B) erstreckt.

17. Kupplung nach einem der Ansprüche 1 bis 16, **dadurch gekennzeichnet, dass** das Verstärkungsorgan (22) aus Metallblech besteht und vorzugsweise in etwa radiale Versteifungsvorsprünge (31) umfasst.

18. Kupplung nach einem der Ansprüche 1 bis 16, **dadurch gekennzeichnet, dass** das Verstärkungsorgan (22) aus geformten Metall besteht und vorzugsweise in etwa radiale Versteifungsrippen (48) umfasst.

19. Kupplung nach einem der vorherigen Ansprüche, **dadurch gekennzeichnet, dass** das Verstärkungsorgan (22) einen radial inneren Teil umfasst, der sich relativ zum Deckel (12) im Überhang erstreckt und ein Gelenk- und Auflageelement (20B) für die Membranfeder (14; 14A) trägt.

20. Kupplung nach einem der vorherigen Ansprüche, **dadurch gekennzeichnet, dass** das Verstärkungsorgan (22) mindestens eine Zone (44) umfasst, die für die Auswuchtung der Kupplung vorgesehen ist.

21. Kupplung nach einem der vorherigen Ansprüche, **dadurch gekennzeichnet, dass** sie mehrere Verstärkungsorgane (22) aufweist, die durch umfangsmäßig voneinander beabstandete Stücke auf dem Deckel (12) gebildet sind.

22. Kupplung nach einem der vorherigen Ansprüche, **dadurch gekennzeichnet, dass** der Deckel (12) aus Metallblech besteht und vorzugsweise in etwa radiale Versteifungsvorsprünge (29) umfasst.

23. Kupplung nach einem der Ansprüche 1 bis 22, **dadurch gekennzeichnet, dass** das Verstärkungsorgan (22) innen am Deckel (12) angebracht ist.

24. Kupplung nach einem der Ansprüche 1 bis 22, **dadurch gekennzeichnet, dass** das Verstärkungsorgan (22) außen am Deckel (12) angebracht ist.

25. Kupplung nach einem der Ansprüche 1 bis 22, **dadurch gekennzeichnet, dass** sie dazu geeignet ist, mit einem automatisierten Getriebesystem kombiniert zu werden.
